# EUROPÄISCHE PATENTSCHRIFT

(11) **EP 0 341 449 B1**
(45) Veröffentlichungstag und Bekanntmachung des Hinweises auf die Patenterteilung: **02.06.1993**
(21) Anmeldenummer: 89106850.4
(22) Anmeldetag: 17.04.1989
(51) Int. Cl.: F16K 27/06, F16K 5/06

(54) **Kugelhahn**
Ball valve
Robinet à tournant sphérique

(30) Priorität: 10.05.1988 DE 3815893
(43) Veröffentlichungstag der Anmeldung: 15.11.1989
(73) Patentinhaber: DEUTSCHE BABCOCK- BORSIG AKTIENGESELLSCHAFT, 13507 Berlin (DE)
(72) Erfinder: Hoffmann, Michael, D-1000 Berlin 51 (DE); Batty, Jack Benjamin, Notts, Newark NG23 7NG (GB)
(74) Vertreter: Müller, Jürgen, Dipl.-Ing.

(56) Entgegenhaltungen:
- EP-A- 0 244 068
- DE-A- 2 354 666
- US-A- 4 151 855
- US-A- 4 408 636
- "Industrie Armaturen,Jahrbuch 1.Ausgabe 1986, Seiten 136 bis 141"

## Beschreibung

Die Erfindung betrifft einen Kugelhahn mit den Merkmalen des Oberbegriffes des Anspruches 1.

Derartige Kugelhähne (Industrie Armaturen, Jahrbuch 1. Ausgabe 1986, Seiten 136 bis 141) werden unter anderem als Absperrorgane in Rohrleitungen eingesetzt, die durch Molchen gereinigt werden müssen. Ein solches Reinigen ist zum Beispiel erforderlich, um Ablagerungen, die sich während des Baues oder des Betriebes der Rohrleitung ansammeln, zu entfernen. Der Molch oder das den Molch vorantreibende Druckmittel kann in die empfindlichen Dichtungen des Kugelhahnes dringen und zu Schäden an dem Kugelküken und den Sitzringen führen.

Der Erfindung liegt die Aufgabe zugrunde, den gattungsgemäßen Kugelhahn so zu gestalten, daß an dem Kugelküken und den Sitzringen keine Beschädigungen beim Molchen der an den Kugelhahn angeschlossenen Rohrleitungen auftreten.

Diese Aufgabe wird bei einem gattungsgemäßen Kugelhahn erfindungsgemäß durch die kennzeichnenden Merkmale des Anspruches 1 gelöst. Vorteilhafte Ausgestaltungen der Erfindung sind in den Unteransprüchen angegeben.

Für das Molchen der Rohrleitung und des Kugelhahnes werden die Kugelhahnteile durch die Austauschelemente ersetzt. Diese stimmen in den Abmessungen mit den Kugelhahnteilen überein, so daß der Durchfluß durch den Kugelhahn gewährleistet ist. Beim Molchen kommen der Molch und das Druckmittel nicht mit den gefährdeten Kugelhahnteilen in Berührung, wobei gleichzeitig ein Abschluß gegenüber dem Inneren des Gehäuses des Kugelhahnes gegeben ist.

Ein Ausführungsbeispiel der Erfindung ist in der Zeichnung dargestellt und wird im folgenden näher erläutert.
Es zeigen:

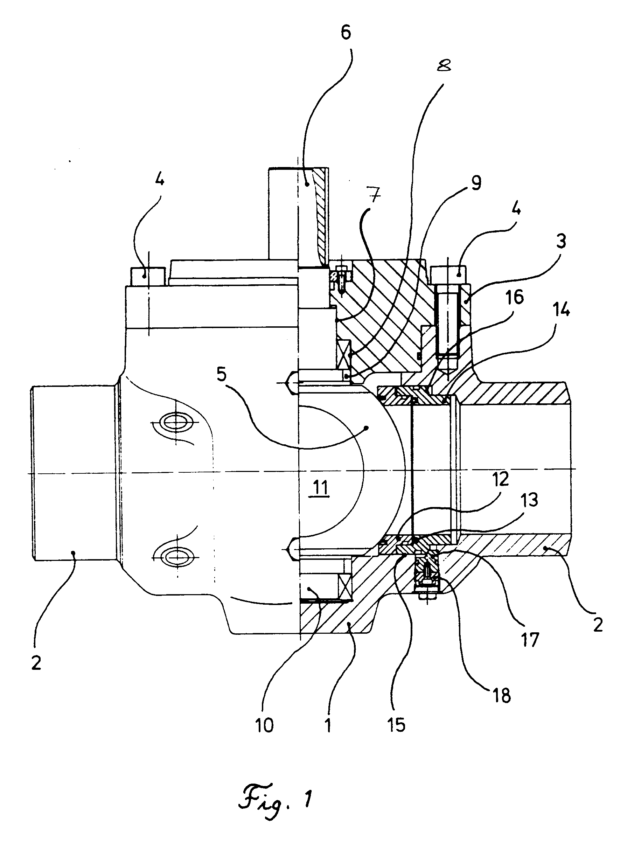

- Fig. 1: den Längsschnitt durch einen Kugelhahn mit Originalteilen und
- Fig. 2: den Längsschnitt durch den gleichen Kugelhahn mit Austauschelementen.

Der Kugelhahn besteht aus einem Gehäuse 1, an das zwei Stutzen 2 angeschlossen sind. Die Stutzen 2 werden in eine nicht gezeigte Rohrleitung eingeschweißt. Das Gehäuse 1 ist durch einen Deckel 3 geschlossen, der über Schrauben 4 lösbar mit dem Gehäuse 1 verbunden ist.

Innerhalb des Gehäuses 1 ist drehbar ein Kugelküken 5 angeordnet, das mit einem Antriebszapfen 6 versehen ist. Der Antriebszapfen 6 ist durch eine in dem Deckel 3 vorgesehene Durchtrittsöffnung 7 hindurchgeführt. Die Durchtrittsöffnung 7 nimmt ein Lager 8 und eine Dichtung 9 für den Antriebszapfen 6 auf. Auf der dem Antriebszapfen 6 abgewandten Seite ist das Kugelküken 5 mit einem Drehzapfen 10 versehen der in einer Ausnehmung des Gehäuses 1 gelagert ist.

Das Kugelküken 5 ist mit einer Durchgangsbohrung 11 versehen, die in der gezeigten Schließstellung senkrecht zu den Stutzen 2 liegt und in der Offenstellung mit diesen Stutzen 2 fluchtet. An der Oberfläche des Kugelkükens 5 liegen zwei Sitzringe 12 an. Jeder Sitzring 12 ist über eine Feder 13 gegen eine Sitzbuchse 14 abgestützt, die in einer Ausdrehung 15 des Gehäuses 1 liegt. Der Innendurchmesser der Sitzringe 12 und der Sitzbuchsen 14 stimmt mit dem Innendurchmesser der Stutzen 2 und dem Durchmesser der Durchgangsbohrung 11 überein. Die Sitzbuchse 14 weist einen Vorsprung 16 mit einer Keilfläche auf, die mit der Keilfläche eines Druckstückes 17 zusammenwirkt. Das Druckstück 17 ist über Schrauben 18 von außen anstellbar. Das Druckstück 17 sorgt für eine Halterung der Sitzbuchse 14 innerhalb des Gehäuses 1 und für eine einstellbare, federnde Anpressung der Sitzringe 12 gegen die Oberfläche des Kugelkükens 5.

Nach dem Lösen der Schrauben 4 kann der Deckel 3 von dem Gehäuse 1 abgenommen werden. Durch die so freigelegte Öffnung des Gehäuses 1 können das Kugelküken 5, die Sitzringe 12 und die Sitzbuchsen 14 aus- und eingebaut werden. Soll die Rohrleitung und der in die Rohrleitung eingesetzte Kugelhahn gemolcht werden, so werden das Kugelküken 5, die Sitzringe 12 und die Sitzbuchsen 14 durch Austauschelemente ersetzt, die aus mindestens zwei Rohren bestehen.

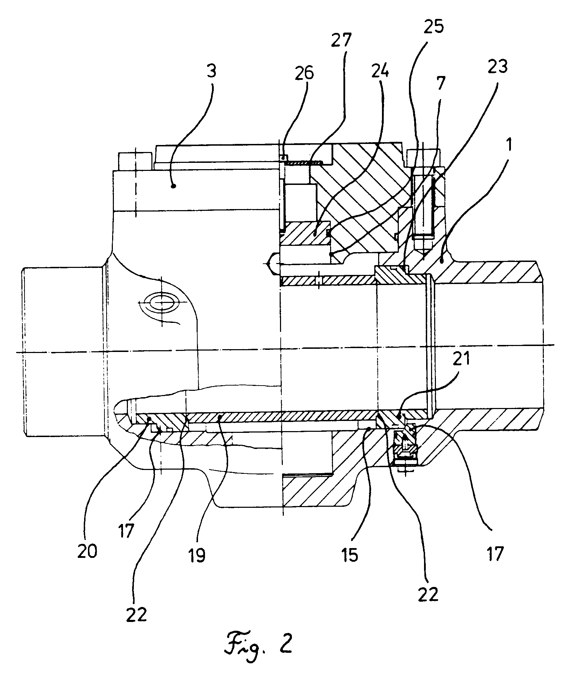

Gemäß Fig. 2 bestehen die Austauschelemente aus drei Rohren 19, 20, 21, deren Innendurchmesser dem Durchmesser der Durchgangsbohrung 11 entspricht. Das mittlere Rohr 19 weist eine Länge auf, die gleich groß wie oder größer ist als die Länge der Durchgangsbohrung 11. Das mittlere Rohr 19 ist an den Stirnflächen mit je einem Absatz 22 versehen, die in entsprechende Ausnehmungen in den benachbarten Stirnflächen der äußeren Rohre 20, 21 eingreifen. Durch den an die Stirnflächen des mittleren Rohres 19 angeformten Absatz 22 und das Einpassen der äußeren Rohre 20, 21 in die Ausdrehungen 15 des Gehäuses 1 können sich die aus den Rohren 19, 20, 21 bestehenden Austauschelemente in dem Gehäuse 1 und in sich selbst zentrieren.

Die äußeren Rohre 20, 21 zeigen eine Außenkontur, die mit derjenigen der aus Sitzring 12 und Sitzbuchse 14 bestehenden Garnitur übereinstimmt. So ist jedes äußere Rohr mit einem eine Keilfläche aufweisenden Vorsprung 23 versehen. Die äußeren Rohre 20, 21 liegen in der Ausdrehung 15 des Gehäuses 1 und werden über die Druckstücke 17 der Klemmverbindung in dem Gehäuse 1 gehalten.

Die Durchtrittsöffnung 7 des Deckels 3 ist durch eine Platte 24 verschließbar, die über eine Dichtung 25 gegenüber der Durchtrittsöffnung 7 abgedichtet ist. In die Platte 24 greift das Gewinde einer Schraube 26 ein, deren Kopf in einer die Durchtrittsöffnung 7 überspannenden Scheibe 27 gehalten ist.

## Patentansprüche

1. Kugelhahn mit einem Kugelküken (5), das eine Durchgangsbohrung (11) aufweist, mit einem Antriebszapfen (6) versehen, in einem Gehäuse (1) drehbar gelagert und über Sitzringe (12) gegenüber dem Gehäuse (1) abgedichtet ist, wobei an das Gehäuse (1) zwei Stutzen (2) angeschlossen sind, deren Innendurchmesser dem Durchmesser der Durchgangsbohrung (11) entsprechen, das Gehäuse (1) durch einen Deckel (3) verschließbar ist, der eine Durchtrittsöffnung (7) für den Antriebszapfen (6) aufweist, die Sitzringe (12) über Federelemente (13) auf Sitzbuchsen (14) abgestützt sind, die Sitzbuchsen (14) in Ausdrehungen (15) des Gehäuses (1) liegen und über anstellbare Klemmverbindungen gehalten sind und das Kugelküken (5), die Sitzringe (12) und die Sitzbuchsen (14) aus dem Gehäuse (1) herausnehmbar sind,
dadurch gekennzeichnet, daß
das Kugelküken (5), die Sitzringe (12) und die Sitzbuchsen (14) durch Austauschelemente ersetzt Verden, die sich in dem Gehäuse (1) und in sich selbst derart zentrieren, daß eine Verbindung zwischen den Stutzen (2) gewährleistet ist und die aus mindestens zwei Rohren (19,20,21) bestehen, deren Innendurchmesser dem Durchmesser der Durchgangsbohrung (11) des Kugelkükens (5) entsprechen und deren voneinander wegweisende Enden in den Ausdrehungen (15) des Gehäuses (1) liegen und über die Klemmverbindungen gehalten sind.

2. Kugelhahn nach Anspruch 1, dadurch gekennzeichnet, daß die Austauschelemente aus drei Rohren (19, 20, 21) bestehen, von denen das mittlere Rohr (19) eine Länge aufweist, die gleich oder größer der Länge der Durchgangsbohrung (11) ist und daß die äußeren Rohre (20, 21) eine Außenkontur aufweisen, die der Außenkontur der Sitzringe (12) und der Sitzbuchsen (14) angepaßt ist.

3. Kugelhahn nach Anspruch 1 oder 2, dadurch gekennzeichnet, daß die Durchtrittsöffnung (7) des Deckels (3) durch eine Platte (24) verschließbar ist.

## Claims

1. Ball cock with a ball plug (5), which has a passage bore (11), is provided with a drive spigot (6), is rotatably mounted in a housing (1) and is sealed relative to the housing (1) by seating rings (12), wherein two stub pipes (2), the inner diameter of which corresponds to the diameter of the passage bore (11), are connected to the housing (1), the housing (1) is closable by a cover (3) which has a through opening (7) for the drive spigot (6), the seating rings (12) are supported by way of spring elements (13) on seating bushes (14), the seating bushes (14) lie in recesses (15) of the housing (1) and are retained by way of adjustable clamping connections, and the ball plug (5), the seating rings (12) and the seating bushes (14) are removable from the housing (1), characterised thereby that the ball plug (5), the seating rings (12) and the seating bushes (14) are replaced by exchangeable elements, which are centred in the housing (1) and in themselves in such a manner that a connection between the stub pipes (2) is ensured and which consist of at least two pipes (19, 20, 21), the inner diameter of which corresponds to the diameter of the passage bore (11) of the ball plug (5) and the ends of which facing away from each other lie in the recesses (15) of the housing (1) and are retained by the clamping connections.

2. Ball cock according to claim 1, characterised thereby that the exchange elements consist of three pipes (19, 20, 21), of which the middle pipe (19) had a length which is the same as or greater than the length of the passage bore (11) and that the outer pipes (20, 21) have an outer contour which is matched to the outer contour of the seating rings (12) and the seating bushes (14).

3. Ball cock according to claim 1 or 2, characterised thereby that the through opening (7) of the cover (3) is closable by a plate (24).

## Revendications

1. Robinet à boisseau sphérique, avec un boisseau sphérique (5), présentant un trou de passage (11), pourvu d'un tourillon d'entraînement (6), monté à rotation dans un corps (1) et isolé de façon étanche par rapport au corps (1), par l'intermédiaire de bagues de siège (12), sur le corps (1) étant raccordées deux tubulures (2), dont les diamètres intérieurs correspondent au diamètre du trou de passage (11), le corps (1) étant susceptible d'être obturé au moyen d'un couvercle (3) présentant une ouverture de passage (7) pour le tourillon d'entraînement (6), les bagues de siège (12) étant soutenues par l'intermédiaire d'éléments élastiques (13) sur des douilles de siège (14), les douilles de siège (14) reposant dans des gorges (15) du corps (1) et étant maintenues par l'intermédiaire de liaisons à serrage réglables et le boisseau sphérique (5), les bagues de siège (12) et les douilles de siège (14) pouvant être extraites hors du corps (1), caractérisé en ce que le boisseau sphérique (5), les bagues de siège (12) et les douilles de siège (14) sont remplacées par des éléments de substitution, se centrant dans le corps (1) et en euxmêmes, de telle façon que soit assurée entre les tubulures (2) une liaison composée d'au moins deux tubes (19,20,21), dont les diamètres intérieurs correspondent au diamètre du trou de passage (11) du boisseau sphérique (5) et dont les extrémités mutuellement éloignées sont situées dans les gorges (15) du corps (1) et maintenues par l'intermédiaire des liaisons à serrage.

2. Robinet à boisseau sphérique selon la revendication 1, caractérisé en ce que les éléments de substitution sont composés de trois tubes (19,20,21), dont le tube central (19) présente une longueur identique ou supérieure à la longueur du trou de passage (11) et en ce que les tubes extérieurs (20,21) présentent un contour extérieur adapté au contour extérieur des bagues de siège (12) et des douilles de siège (14).

3. Robinet à boisseau sphérique selon la revendication 1 ou 2, caractérisé en ce que l'ouverture de passage (7) du couvercle (3) est susceptible d'être obturée au moyen d'une plaque (24).
